# EUROPEAN PATENT APPLICATION

(11) **EP 4 841 815 A1**
(43) Date of publication of application: **18.11.2026**
(21) Application number: 26168305.6
(22) Date of filing: 26.03.2026
(51) Int. Cl.: H01M 50/583, H01M 10/42, H01M 50/507, H01M 50/569

(54) **BATTERY PACK**

(30) Priority: 14.05.2025 KR 20250062591
(71) Applicant: SAMSUNG SDI CO., LTD., Yongin-si, Gyeonggi-do 17084 (KR)
(72) Inventor: AHN, Jae Pil, 16678 SUWON-SI (KR)
(74) Representative: Regimbeau

(57) **Abstract**

The present disclosure relates to a battery pack and a technical object to be achieved is to provide a battery pack in which a fuse unit including a fuse can be detachably installed in the battery pack and the fuse unit can be detached from the battery pack without detaching a pack circuit part from the battery pack. To this end, the present disclosure provides a battery pack including a battery stack including a plurality of secondary batteries, a pack housing in which the battery stack is accommodated, a battery-facing member disposed to face one side of the battery stack, and a fuse unit including a block detachably coupled to the battery-facing member, an in-block wire formed in the block, a fuse connected to the in-block wire, and a first in-block terminal and a second in-block terminal connected to the in-block wire and provided on one side and another side of the block.

## Description

### FIELD

The present disclosure relates to a battery pack.

### BACKGROUND

A lithium secondary battery is a battery which includes a positive electrode and a negative electrode material, each of which includes an active material capable of intercalating and deintercalating lithium ions and an electrolyte and in which electrical energy is produced through oxidation and reduction reactions when lithium ions are intercalated/deintercalated into/from the positive electrode and the negative electrode.

Secondary batteries are widely used for powering or storing energy in not only small devices such as portable electronic devices, but also medium to large devices such as electric vehicles and energy storage systems (ESS). In particular, for a medium or large-sized device, a battery pack in which a plurality of secondary batteries are electrically connected to one another is used.

The aforementioned information disclosed in this background section is merely for enhancement of understanding of the background technology of the present disclosure, and therefore may contain information that does not constitute the related art.

### SUMMARY

The present disclosure is directed to providing a battery pack in which a fuse unit including a fuse can be detachably installed in the battery pack and the fuse unit can be detached from the battery pack without detaching a pack circuit part from the battery pack.

However, technical objectives to be achieved by the present disclosure are not limited to the herein-described objectives, and other objectives, which are not described herein, will be clearly understood by those skilled in the art through the following description of the disclosure.

According to aspects of the present disclosure, there is provided a battery pack including a battery stack including a plurality of secondary batteries, a pack housing in which the battery stack is accommodated, a battery-facing member disposed to face one side of the battery stack, and a fuse unit including a block detachably coupled to the battery-facing member, an in-block wire formed in the block, a fuse connected to the in-block wire, and a first in-block terminal and a second in-block terminal connected to the in-block wire and provided on one side and another side of the block.

Each of the secondary batteries may include a pair of battery terminals, the battery pack may further include a bus bar connecting one of the pair of battery terminals included in one of the plurality of secondary batteries and one of the pair of battery terminals included in another of the plurality of secondary batteries, and the battery-facing member may support the bus bar.

The battery-facing member may include a pair of hooks which are spaced apart from one another so that the block is interposed therebetween and are elastically deformed in a direction in which a gap therebetween increases.

The hook may include a hook protrusion protruding toward the block, and the block may include a hook fastening groove portion into which the hook protrusion is fitted.

One of the block and the battery-facing member may include a guide protrusion protruding toward another, another of the block and the battery-facing member may include a guide groove portion into which the guide protrusion is inserted, and the block may be coupled to the battery-facing member only when the guide protrusion is fitted into the guide groove portion.

The battery pack may further include a pack circuit part including a first connection terminal connected to the first in-block terminal when the fuse unit is coupled to the battery-facing member, a first pack wire connected to the first connection terminal, a second connection terminal connected to the second in-block terminal when the fuse unit is coupled to the battery-facing member, and a second pack wire connected to the second connection terminal.

The battery pack may further include a sensing part connected to the first pack wire or the second pack wire to measure a state of the battery stack.

The pack circuit part may further include a first connection terminal coupled to the first pack wire and in close contact with the first in-block terminal when the block is coupled to the battery-facing member, and a second connection terminal coupled to the second pack wire and in close contact with the second in-block terminal when the block is coupled to the battery-facing member.

The first connection terminal may include a first convex protrusion protruding convexly toward the first in-block terminal so as to be in close contact with the first in-block terminal and having a curved cross-sectional shape, and the second connection terminal may include a second convex protrusion protruding convexly toward the second in-block terminal so as to be in close contact with the second in-block terminal and having a curved cross-sectional shape.

The first connection terminal may further include a first flange portion flatly extending around the first convex protrusion, a first terminal body portion overlapping the first pack wire, and a first bridge portion connecting the first flange portion and the first terminal body portion and extending along a curved path, and the second connection terminal may further include a second flange portion flatly extending around the second convex protrusion, a second terminal body portion overlapping the second pack wire, and a second bridge portion connecting the second flange portion and the second terminal body portion and extending along a curved path.

The first connection terminal may further include a first rib portion protruding from the first bridge portion in a thickness direction of the first bridge portion, and the second connection terminal may further include a second rib portion protruding from the second bridge portion in a thickness direction of the second bridge portion.

In a state in which the first convex protrusion is in close contact with the first in-block terminal, the first flange portion may be spaced apart from the first in-block terminal, and in a state in which the second convex protrusion is in close contact with the second in-block terminal, the second flange portion may be spaced apart from the second in-block terminal.

The pack circuit part may further include an insulating film supporting the first pack wire and the second pack wire, the first connection terminal may further include a first bent portion that protrudes from the first terminal body portion, passes through the insulating film, and is bent to couple the first connection terminal to the insulating film and to electrically come into contact with the first pack wire, and the second connection terminal may further include a second bent portion that protrudes from the second terminal body portion, passes through the insulating film, and is bent to couple the second connection terminal to the insulating film and to electrically come into contact with the second pack wire.

The pack circuit part may further include an insulating film supporting the first pack wire and the second pack wire, the first connection terminal may further include a first bent portion that protrudes from the first terminal body portion, passes through the insulating film, and is bent to couple the first connection terminal to the insulating film, the second connection terminal may further include a second bent portion that protrudes from the second terminal body portion, passes through the insulating film, and is bent to couple the second connection terminal to the insulating film, and the first terminal body portion may be electrically in contact with the first pack wire and the second terminal body portion may be electrically in contact with the second pack wire.

The first in-block terminal may be located at a first side surface of the block, and the second in-block terminal may be located at a second side surface of the block facing away from the first side surface.

The block may include a first terminal groove portion recessed in a stepped manner toward an inside of the block on the first side surface and where the first in-block terminal is located, and a second terminal groove portion recessed in a stepped manner toward an inside of the block on the second side surface and where the second in-block terminal is located, when the first convex protrusion is in close contact with the first in-block terminal, the first convex protrusion and the first flange portion may be fitted into the first terminal groove portion, and when the second convex protrusion is in close contact with the second in-block terminal, the second convex protrusion and the second flange portion may be fitted into the second terminal groove portion.

### BRIEF DESCRIPTION OF THE DRAWINGS

The herein and other objects, features and advantages of the present disclosure will become more apparent to those of ordinary skill in the art by describing exemplary embodiments thereof in detail with reference to the accompanying drawings, in which:
FIG. 1 is a perspective view of a battery pack according to embodiments of the present disclosure;
FIG. 2 is an extracted perspective view of a pack circuit part and a fuse unit of FIG. 1;
FIG. 3 is an enlarged plan view of portion A of FIG. 2, illustrating a state in which a fuse unit is coupled to a battery-facing member;
FIG. 4 is a cross-sectional view taken along line S1-S1 of FIG. 3;
FIG. 5 is a cross-sectional view taken along line S2-S2 of FIG. 3
FIG. 6 is an enlarged view of portion B of FIG. 5;
FIG. 7 is a cross-sectional view taken along line S3-S3 of FIG. 5;
FIG. 8 is a perspective view of a first connection terminal and a second connection terminal of FIG. 5;
FIG. 9 is an enlarged view of portion C of FIG. 8;
FIG. 10 is an enlarged perspective view illustrating portion C of FIG. 8 so that a rib portion is visible;
FIG. 11 is a perspective view of the fuse unit of FIG. 2;
FIG. 12 is a cross-sectional view illustrating a fuse unit included in a battery pack according to embodiments of the present disclosure and elements coupled to the fuse unit, and is a view corresponding to FIG. 5 of the battery pack according to embodiments of the present disclosure;
FIG. 13 is an enlarged cross-sectional view of portion D of FIG. 12;
FIG. 14 is a cross-sectional view illustrating a fuse unit included in a battery pack according to embodiments of the present disclosure and elements coupled to the fuse unit, and is a view corresponding to FIG. 5 of the battery pack according to embodiments of the present disclosure;
FIG. 15 is a perspective view of the fuse unit of FIG. 14;
FIG. 16 is a plan view of a fuse unit included in a battery pack according to embodiments of the present disclosure; and
FIG. 17 is a perspective view of a fuse unit included in a battery pack according to embodiments of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to one another, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to one another.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

A battery pack may include, for example, a sensor for detecting a state of the battery pack during charging and discharging such as a temperature sensor or a voltage sensor, and a fuse for blocking a circuit when an abnormality such as a short circuit occurs.

A battery pack that cannot perform charging and discharging due to melted fuses are being replaced with a new battery pack even when there is no abnormality in the secondary battery included in the battery pack.

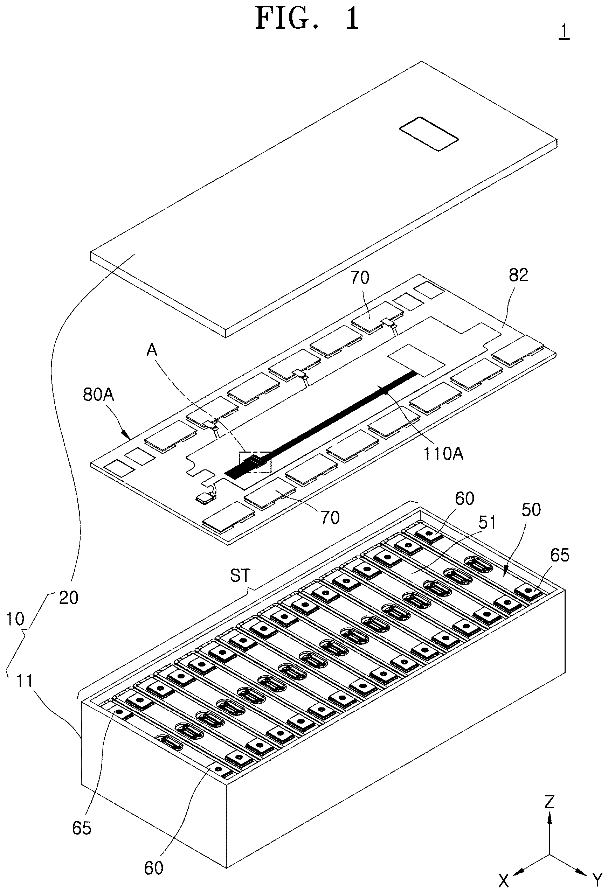

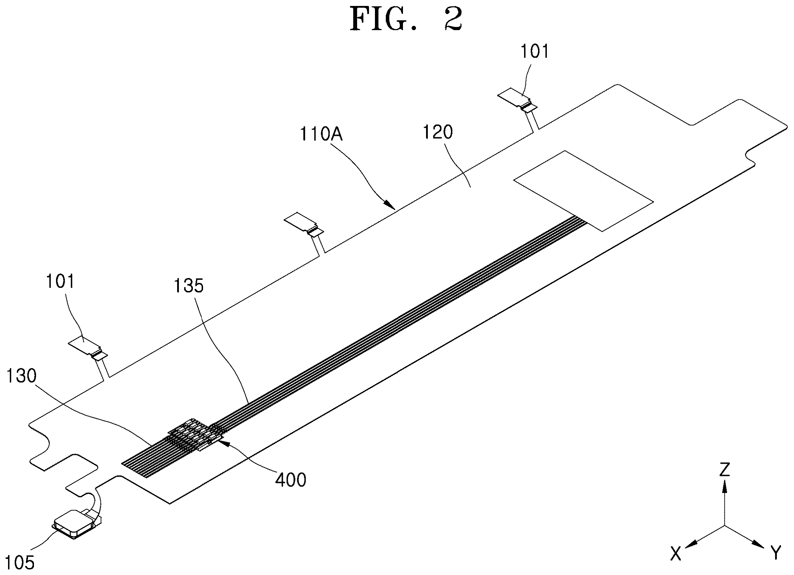

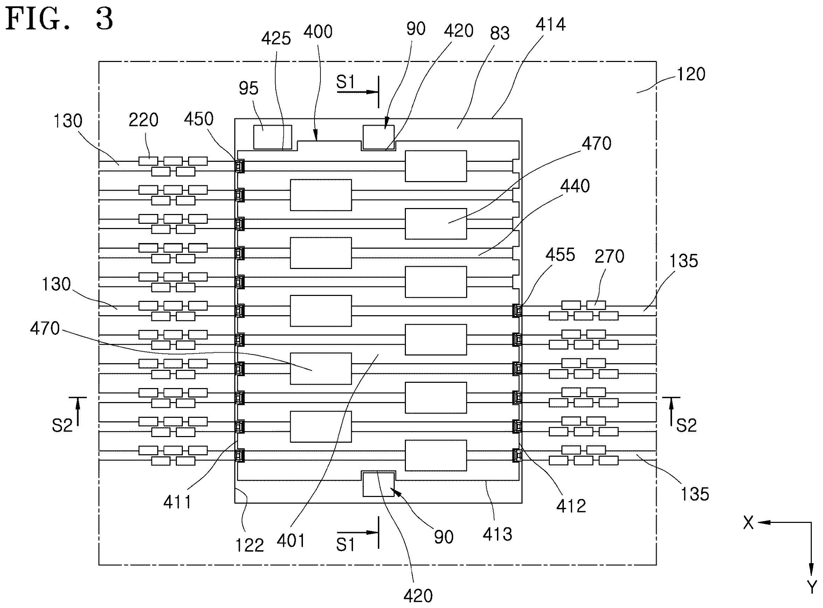

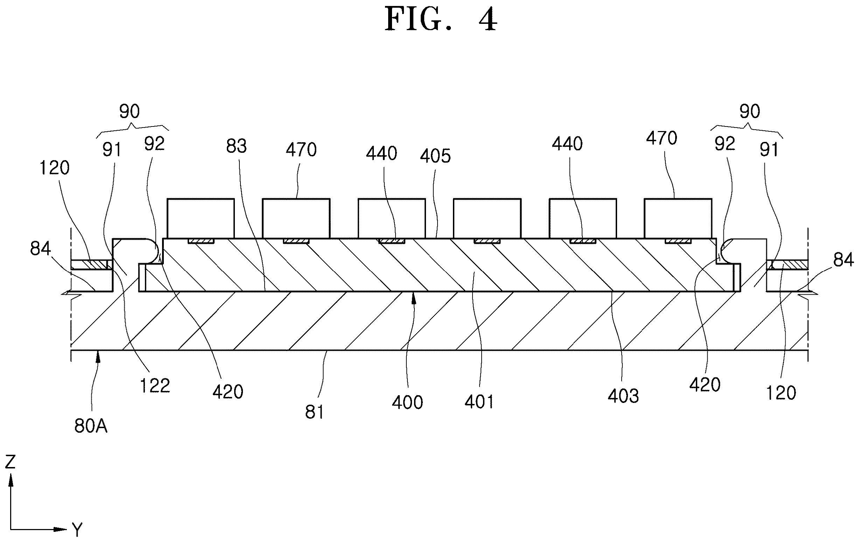

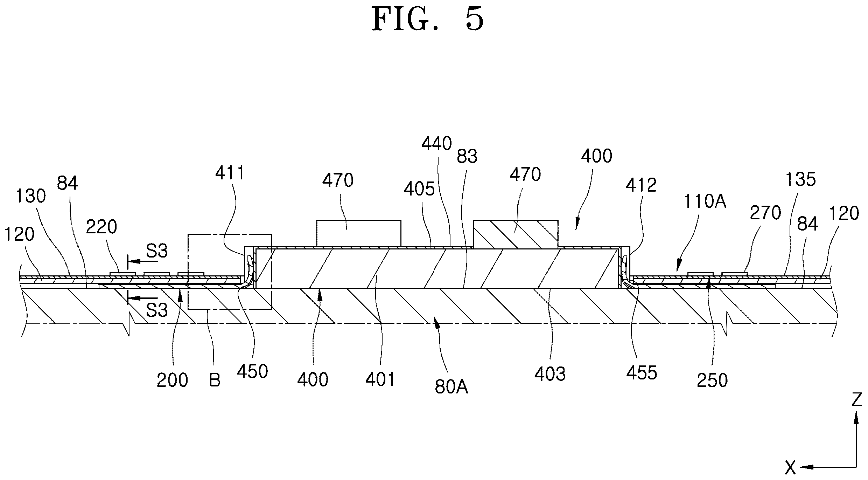

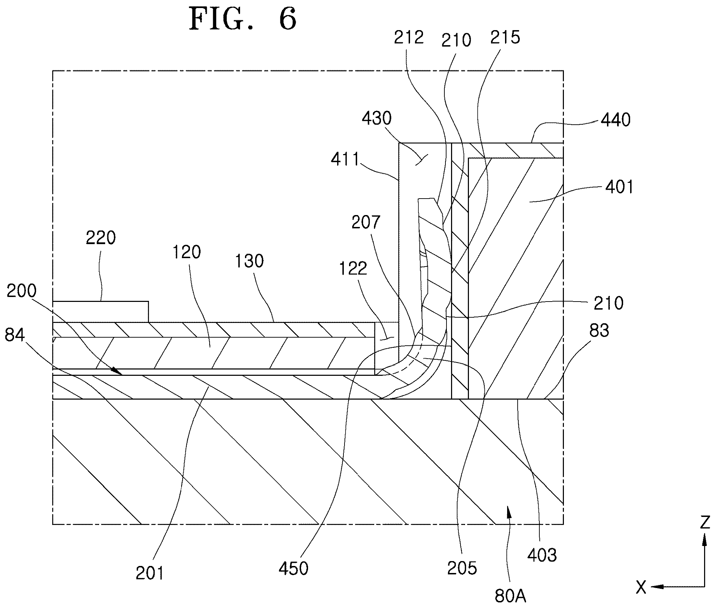

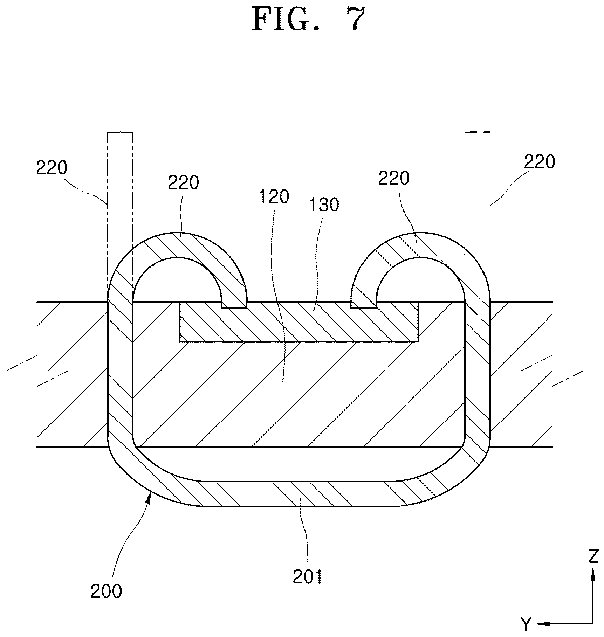

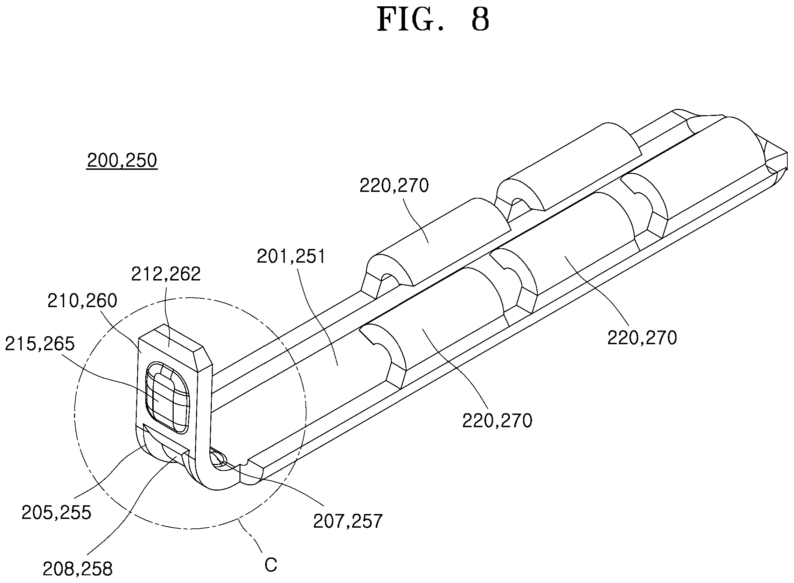

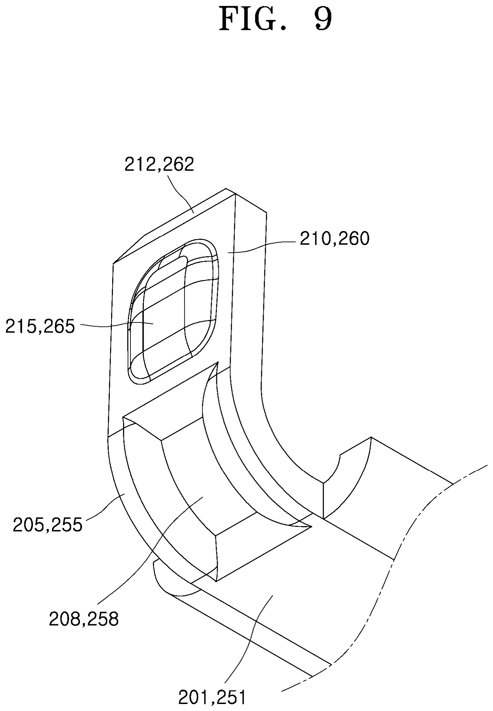

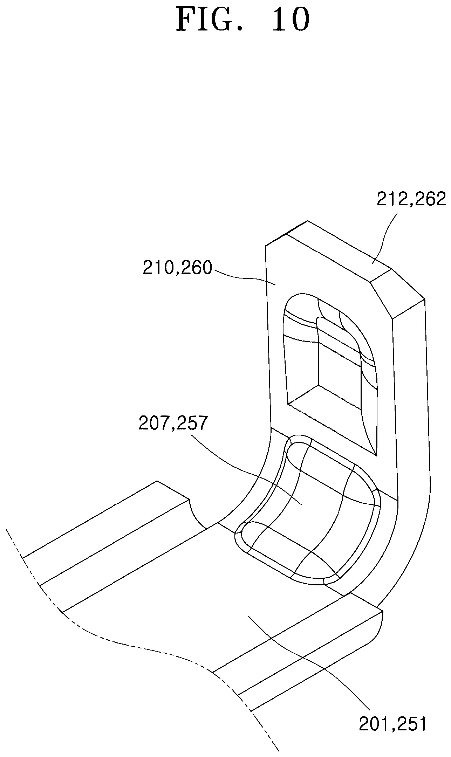

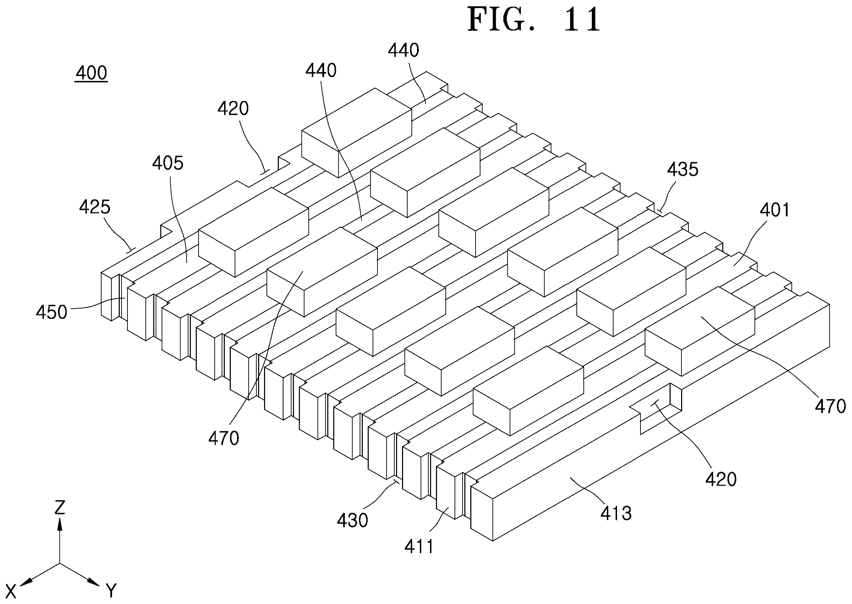

FIG. 1 is a perspective view of a battery pack according to embodiments of the present disclosure, FIG. 2 is an extracted perspective view of a pack circuit part and a fuse unit of FIG. 1, FIG. 3 is an enlarged plan view of portion A of FIG. 2, illustrating a state in which a fuse unit is coupled to a battery-facing member, FIG. 4 is a cross-sectional view taken along line S1-S1 of FIG.3, FIG. 5 is a cross-sectional view taken along line S2-S2 of FIG.3, FIG. 6 is an enlarged view of portion B of FIG. 5, FIG. 7 is a cross-sectional view taken along line S3-S3 of FIG.5, FIG. 8 is a perspective view of a first connection terminal and a second connection terminal of FIG. 5, FIG. 9 is an enlarged view of portion C of FIG. 8, FIG. 10 is an enlarged perspective view illustrating portion C of FIG. 8 so that a rib portion is visible, and FIG. 11 is a perspective view of the fuse unit of FIG. 2.

Referring to FIGS. 1 to 11, a battery pack 1 according to embodiments of the present disclosure includes a battery stack ST, a pack housing 10, a battery-facing member 80A, and a fuse unit 400. The battery stack ST includes a plurality of secondary batteries 50. For example, the battery stack ST may include a plurality of secondary batteries 50 arranged in a row in a first direction.

The secondary battery 50 functions as a unit structure for storing and supplying power in the battery pack 1. The secondary battery 50 may include a case 51 and an electrode assembly (not shown) accommodated in the case 51. For example, the secondary battery 50 may be a prismatic secondary battery with a substantially parallelepiped-shaped case 51.

The secondary battery 50 may include a first battery terminal 60 and a second battery terminal 65 protruding from the case 51 in a third direction. For example, the first battery terminal 60 may be a positive electrode terminal, and the second battery terminal 65 may be a negative electrode terminal. The first battery terminal 60 and the second battery terminal 65 may be connected to the electrode assembly.

The pack housing 10 forms an approximate exterior of the battery pack 1. The pack housing 10 may have an inner space in which the secondary battery 50 can be accommodated. The pack housing 10 according to embodiments may include a housing body 11 and a cover 20.

The housing body 11 may be formed to have a box shape including open one side and an inner space. The plurality of secondary batteries 50 may be accommodated in the inner space of the housing body 11. A cross-sectional shape of the housing body 11 is not limited to the rectangular shape shown in FIG.1 and may be designed to have various shapes such as polygonal, circular, and elliptical shapes.

The cover 20 may be coupled to the housing body 11 and may close the internal space of the housing body 11. In one example, the cover 20 may be formed to have a substantially plate shape and may be disposed to face the open side of the housing body 11. The cover 20 may be fixed to the housing body 11 by various types of coupling methods such as bolting, welding, and fitting.

The pack housing 10 may extend in the first direction. The first battery terminal 60 and the second battery terminal 65 may protrude in a direction toward the cover 20. A width direction of the pack housing 10 may be a second direction orthogonal to the first direction and the third direction.

In FIGS. 1 to 11, the first direction may be a direction parallel to an X-axis, the second direction may be a direction parallel to a Y-axis, and the third direction may be a direction parallel to a Z-axis. For example, a positive (+) direction of the X-axis may be a front direction, a negative (-) direction of the X-axis may be a rear direction, a positive (+) direction of the Y-axis may be a left direction, a negative (-) direction of the Y-axis may be a right direction, a positive (+) direction of the Z-axis may be an upward direction, and a negative (-) direction of the Z-axis may be a downward direction.

The battery-facing member 80A is disposed to face one side of the battery stack ST. For example, the battery-facing member 80A may be disposed to face an upper surface of the case 51 from which the first battery terminal 60 and the second battery terminal 65 protrude. The battery-facing member 80A may be located between the battery stack ST and the cover 20 inside the pack housing 10 and may be fixed to and supported by the housing body 11.

The battery pack 1 may further include a plurality of bus bars 70. The bus bar 70 may connect one terminal of a pair of battery terminals 60 and 65 included in one secondary battery of the plurality of secondary batteries 50 and one terminal of a pair of battery terminals 60 and 65 included in another secondary battery of the plurality of secondary batteries 50.

For example, the bus bar 70 may connect the first battery terminal 60 of one secondary battery 50 and the second battery terminal 65 of another secondary battery 50. In this case, the plurality of secondary batteries 50 may be connected in series by the plurality of bus bars 70.

As another example, the bus bar 70 may connect the first battery terminal 60 of one secondary battery 50 and the first battery terminal 60 of another secondary battery 50, or connect the second battery terminal 65 of one secondary battery 50 and the second battery terminal 65 of another secondary battery 50. In this case, the plurality of secondary batteries 50 may be connected in parallel by the plurality of bus bars 70.

The battery-facing member 80A may be a bus bar holder supporting the plurality of bus bars 70. The battery-facing member 80A may be formed of an insulating material, such as a synthetic resin. The battery-facing member 80A may have a substantially plate shape. The battery-facing member 80A may include a main panel part 82 on which the bus bar 70 and a pack circuit part 110A are supported.

The battery pack 1 may further include the pack circuit part 110A and sensing parts 101 and 105. The sensing parts 101 and 105 measure states of the plurality of secondary batteries 50 during charging and discharging of the battery pack 1. The sensing parts 101 and 105 may include, for example, a plurality of voltage sensors 101 and a plurality of temperature sensors 105.

The voltage sensor 101 may be coupled to the bus bar 70 to measure the voltage of the secondary battery 50 during charging and discharging of the battery pack 1. The temperature sensor 105 may measure the temperature of the battery pack 1 during charging and discharging the battery pack 1.

The pack circuit part 110A may include a first pack wire 130, a second pack wire 135, and an insulating film 120. The insulating film 120 may support the first pack wire 130 and the second pack wire 135. A plurality of first pack wires 130 and a plurality of second pack wires 135 may be provided.

For example, the pack circuit part 110A may be a flexible printed circuit (FPC). In this case, the insulating film 120 may be a flexible film that can be easily bent. The first pack wire 130 and the second pack wire 135 may be formed by stacking a conductive material on the insulating film 120.

The first pack wire 130 and the second pack wire 135 may be stacked on an upper surface of the insulating film 120. The upper surface of the insulating film 120 may be a side surface, that is, a lower surface, facing away from the battery-facing member 80A among upper and lower surfaces of the insulating film 120.

In embodiments of the present disclosure illustrated in FIGS. 5 to 7, the first pack wire 130 and the second pack wire 135 are illustrated as being exposed on the insulating film 120. However, a battery-facing member included in the battery pack according to embodiments of the present disclosure may further include another insulating film covering the first pack wire 130 and the second pack wire 135 and attached to the insulating film 120.

Meanwhile, in embodiments of the present disclosure, the pack circuit part may be a printed circuit board (PCB) that is not bent.

One end portion of the first pack wire 130 may be electrically connected to the voltage sensor 101 or the temperature sensor 105 of the sensing parts 101 and 105. One end portion of the second pack wire 135 may be electrically connected to a battery pack controller (not shown) controlling the battery pack 1.

Meanwhile, in embodiments of the present disclosure, the first pack wire may be electrically connected to the battery pack controller, and the second pack wire may be electrically connected to the sensing part.

The fuse unit 400 includes a block 401, an in-block wire 440, a fuse 470, a first in-block terminal 450, and a second in-block terminal 455. The block 401 is detachably coupled to the battery-facing member 80A. The block 401 may have, for example, a substantially rectangular planar shape.

In order to allow the block 401 to be coupled to the battery-facing member 80A, a through hole 122 with an area larger than a planar area of the block 401 may be formed in the insulating film 120. The block 401 may include a bottom surface 403, a fuse mounting surface 405, a first side surface 411, a second side surface 412, a third side surface 413, and a fourth side surface 414.

The bottom surface 403 may be a surface that is in contact with and supported by the battery-facing member 80A. The fuse mounting surface 405 may be a surface on which the fuse 470 is mounted. In FIGS. 1 to 11, the bottom surface 403 may be a bottom surface of the block 401, and the fuse mounting surface 405 may be an upper surface of the block 401.

The in-block wire 440 may be formed on a surface of the block 401. In the fuse unit 400 illustrated in FIGS. 1 to 11, the in-block wire 440 may be formed on the upper surface (fuse mounting surface) 405 of the block 401. The fuse 470 is connected to the in-block wire 440. The fuse 470 may be a chip type fuse mounted on the block 401. The chip type fuse 470 may include a semiconductor chip with a circuit formed therein that breaks when an overcurrent flows.

The first in-block terminal 450 and the second in-block terminal 455 are connected to the in-block wire 440. The first in-block terminal 450 may be located at the first side surface 411, and the second in-block terminal 455 may be located at the second side surface 412. In FIGS. 1 to 11, the first side surface 411 may be a front surface of the block 401, and the second side surface 412 may be a rear surface of the block 401.

The in-block wire 440 may extend parallel to the first direction to cross the first side surface 411 and the second side surface 412. The in-block wire 440 may include a one side wire part and the other side wire part spaced apart from one another with the fuse 470 interposed therebetween. Both end portions in a longitudinal direction of the one side wire portion of the in-block wire 440 may be connected to the first in-block terminal 450 and the fuse 470. Both end portions in a longitudinal direction of the other side wire portion of the in-block wire 440 may be connected to the second in-block terminal 455 and the fuse 470.

A plurality of fuses 470 may be mounted on the block 401. The block 401 may include a plurality of first in-block terminals 450, a plurality of second in-block terminals 455, and a plurality of in-block wires 440 to correspond one-to-one to the plurality of fuses 470.

The battery-facing member 80A may include a block supporting surface 83, which is in contact with and supports the block 401, and a peripheral surface 84, which extends around the block supporting surface 83. The peripheral surface 84 may be covered by the insulating film 120.

The battery-facing member 80A may further include a pair of hooks 90 and a guide protrusion 95. Each of the pair of hooks 90 may include a hook protrusion 92 protruding toward the block 401 when the block 401 is mounted on the block supporting surface 83, and a hook pillar portion 91 extending from the block supporting surface 83 to the hook protrusion 92.

The hook pillar portion 91 may protrude from the block supporting surface 83 in the positive Z-axis direction. The pair of hook protrusions 92 may protrude toward one another. The block 401 may include hook fastening groove portions 420 into which the pair of hook protrusions 92 are fitted. The pair of hook fastening groove portions 420 may be formed on the third side surface 413 and the fourth side surface 414 of the block 401.

As shown in FIGS. 3 and 4, the pair of hooks 90 are located to be spaced apart so that the block 401 is interposed between the pair of hooks 90. The pair of hooks 90 may be elastically deformed in a direction in which a gap between the pair of hooks 90 widens. While the block 401 is in contact with and supported by the block supporting surface 83, the pair of hook protrusions 92 are inserted into the pair of hook fastening groove portions 420 and are elastically attached to the third side surface 413 and the fourth side surface 414. Therefore, the fuse unit 400 may not be unintentionally separated from the battery-facing member 80A.

On the other hand, when the pair of hook protrusions 92 are pressed in a direction that separates the pair of hook protrusions 92 from one another, the gap between the pair of hook protrusions 92 is widened, and the pair of hook protrusions 92 are separated from the pair of hook fastening groove portions 420. In this state, when the block 401 is lifted away from the block supporting surface 83 of the battery-facing member 80A, the fuse unit 400 may be separated from the battery-facing member 80A. When a force applied to the pair of hook protrusions 92 is released after the fuse unit 400 is separated from the battery-facing member 80A, the pair of hook protrusions 92 may be elastically restored to their original shapes.

Conversely, when the fuse unit 400 descends from a position separated from the block supporting surface 83 in the direction of approaching the block supporting surface 83, the pair of hook protrusions 92 are elastically deformed in the direction of widening the gap between two side surfaces by being pushed by the third side surface 413 and the fourth side surface 414. When the fuse unit 400 continues to descend, the bottom surface 403 of the block 401 comes into contact with the block supporting surface 83 such that the fuse unit 400 may be coupled to the battery-facing member 80A. In this case, the pair of hook protrusions 92 may be fitted into the pair of hook fastening groove portions 420 while returning to their original shapes.

The guide protrusion 95 may protrude from the battery-facing member 80A toward the block 401. The block 401 may include a guide groove portion 425 into which the guide protrusion 95 is fitted. When the fuse unit 400 is coupled to the battery-facing member 80A, the block 401 may be coupled to the battery-facing member 80A only when the guide protrusion 95 is inserted into the guide groove portion 425.

Referring to embodiments of FIG. 3, for example, the block 401 may be coupled to the battery-facing member 80A only when the block 401 is lowered in the negative Z-axis direction so that the block 401 comes into contact with the block supporting surface 83 while the first in-block terminal 450 is arranged so as to face the front and the second in-block terminal 455 is arranged so as to face the rear.

However, the block 401 may not be coupled to the battery-facing member 80A when the block 401 is lowered in the negative Z-axis direction while the first in-block terminal 450 faces the rear and the second in-block terminal 455 is arranged so as to face the front.

In embodiments of the present disclosure shown in FIGS. 3 and 11, the guide protrusion 95 protrudes from the block supporting surface 83 in the positive Z-axis direction, and the guide groove portion 425 is inwardly recessed in a stepped manner from the fourth side surface 414. However, in embodiments of the present disclosure, a guide protrusion protrudes toward a block supporting surface of a battery-facing member, and a guide groove portion may be formed on the block supporting surface.

As described herein, the fuse unit 400 may be detachably installed in the battery pack 1. Therefore, when some fuses 470 among the plurality of fuses operate and open such that current does not flow, the pack circuit part 110A may be installed again in the battery pack 1 by only replacing the fuse unit 400 without separating the pack circuit part 110A from the battery pack 1. Accordingly, an undamaged secondary battery 50 in the battery pack 1 may not be discarded, thereby reducing the maintenance and repair costs of devices or equipment using the battery pack 1.

The pack circuit part 110A may further include a first connection terminal 200 and a second connection terminal 250. The first connection terminal 200 is electrically connected to the first in-block terminal 450 when the fuse unit 400 is coupled to the battery-facing member 80A. The second connection terminal 250 is electrically connected to the second in-block terminal 455 when the fuse unit 400 is coupled to the battery-facing member 80A. The first connection terminal 200 is electrically connected to the first pack wire 130, and the second connection terminal 250 is electrically connected to the second pack wire 135.

The first connection terminals 200 may be provided in a number corresponding one-to-one to the number of first pack wires 130, and the second connection terminals 250 may be provided in a number corresponding one-to-one to the number of second pack wires 135. The first connection terminal 200 and the second connection terminal 250 may be formed of a metal material having excellent electrical conductivity. The first connection terminal 200 and the second connection terminal 250 may be manufactured through, for example, plastic processing of a metal plate.

The first connection terminal 200 may include a first convex protrusion 215, a first flange portion 210, a first terminal body portion 201, a first bridge portion 205, and a first bent portion 220. The first convex protrusion 215 may protrude convexly toward the first in-block terminal 450 so as to be in close contact with the first in-block terminal 450. The first convex protrusion 215 may have a curved cross-sectional shape

The first flange portion 210 may be connected and flatly extend around the first convex protrusion 215. The first flange portion 210 may be parallel to the first side surface 411. An end portion of the first flange portion 210 in the positive Z-axis direction may include a first tapered surface 212 that is processed to be inclined.

As a result, when the block 401 moves in the negative Z-axis direction, an edge between the first side surface 411 and the bottom surface 403 may come into contact with the first tapered surface 212 and slide. Therefore, the block 401 may be seated on the block supporting surface 83 without being caught on an end of the first flange portion 210 and coupled to the battery-facing member 80A.

The first terminal body portion 201 may overlap the first pack wire 130. The first terminal body portion 201 may extend parallel to a portion of the first pack wire 130 close to the fuse unit 400. The first terminal body portion 201 may be located between the battery-facing member 80A and the insulating film 120.

The first bridge portion 205 connects the first flange portion 210 and the first terminal body portion 201. The first bridge portion 205 may extend along a curved path. The first bridge portion 205 may extend along a quadrant path.

The first connection terminal 200 may further include a first rib portion 207 protruding from the first bridge portion 205 in a thickness direction of the first bridge portion 205. Since the first bridge portion 205 extends along a curved path, the first bridge portion 205 may include a concave surface and a convex surface opposite to the concave surface. The first rib portion 207 may protrude from the concave surface of the first bridge portion 205. Since the rigidity of the first bridge portion 205 is strengthened due to the protruding first rib portion 207, the first convex protrusion 215 may be reliably elastically attached to the first in-block terminal 450, and thus the durability of the first connection terminal 200 may be improved.

The first connection terminal 200 may further include a first groove portion 208 recessed in the thickness direction of the first bridge portion 205 from the convex surface of the first bridge portion 205. When the first connection terminal 200 is formed through plastic processing of a metal plate, when the convex surface of the first bridge portion 205 is pressed by a tool so that the first groove portion 208 is formed, the first rib portion 207 may be formed on the concave surface of the first bridge portion 205.

As illustrated in FIG. 6, in a state in which the first convex protrusion 215 is in close contact with the first in-block terminal 450, the first flange portion 210 may be spaced apart from the first in-block terminal 450.

The first bent portion 220 may protrude from the first terminal body portion 201. A plurality of first bent portions 220 may be provided at both end portions of the first terminal body portion 201 in the width direction.

As shown by the dashed-dotted line in FIG. 7, the first bent portion 220 may protrude upward in the positive Z-axis direction from under the insulating film 120 to pass through the insulating film 120. An upper end portion of the first bent portion 220 passing through the insulating film 120 and protruding upward from the insulating film 120 may be bent as shown by solid lines in FIGS. 6 to 8 so as to make electrical contact with the first pack wire 130.

The block 401 may include a first terminal groove portion 430 recessed in a stepped manner toward the inside of the block 401 on the first side surface 411. The first in-block terminal 450 may be located in the first terminal groove portion 430. When the block 401 moves in the Z-axis direction relative to the first connection terminal 200, the upper and lower sides of the first terminal groove portion 430 may open in the Z-axis direction so that the block 401 is not restricted from moving by being caught on the first connection terminal 200.

When the fuse unit 400 moves in the negative Z-axis direction so as to be coupled to the battery-facing member 80A and the first tapered surface 212 and the first flange portion 210 of the first connection terminal 200 are fitted into the first terminal groove portion 430 recessed in a stepped manner from the first side surface 411, the first convex protrusion 215 may not be inclined or moved in the Y-axis direction. Therefore, the first convex protrusion 215 may be reliably attached to the first in-block terminal 450.

The second connection terminal 250 may include a second convex protrusion 265, a second flange portion 260, a second terminal body portion 251, a second bridge portion 255, and a second bent portion 270. The second convex protrusion 265 may protrude convexly toward the second in-block terminal 455 so as to be in close contact with the second in-block terminal 455. The second convex protrusion 265 may have a curved cross-sectional shape.

The second flange portion 260 may be connected and flatly extend around the second convex protrusion 265. The second flange portion 260 may be parallel to the second side surface 412. An end portion of the second flange portion 260 in the positive Z-axis direction may include a second tapered surface 262 that is processed to be inclined.

As a result, when the block 401 moves in the negative Z-axis direction, an edge between the second side surface 412 and the bottom surface 403 may come into contact with the second tapered surface 262 and slide. Therefore, the block 401 may be seated on the block supporting surface 83 without being caught on an end of the second flange portion 260 and coupled to the battery-facing member 80A.

The second terminal body portion 251 may overlap the second pack wire 135. The second terminal body portion 251 may extend parallel to a portion of the second pack wire 135 close to the fuse unit 400. The second terminal body portion 251 may be located between the battery-facing member 80A and the insulating film 120.

The second bridge portion 255 connects the second flange portion 260 and the second terminal body portion 251. The second bridge portion 255 may extend along a curved path. The second bridge portion 255 may extend along a quadrant path.

The second connection terminal 250 may further include a second rib portion 257 protruding from the second bridge portion 255 in a thickness direction of the second bridge portion 255. Since the second bridge portion 255 extends along a curved path, the second bridge portion 255 may include a concave surface and a convex surface opposite to the concave surface. The second rib portion 257 may protrude from the concave surface of the second bridge portion 255. Since the rigidity of the second bridge portion 255 is strengthened due to the protruding second rib portion 257, the second convex protrusion 265 may be reliably elastically attached to the second in-block terminal 455, and thus the durability of the second connection terminal 250 may be improved.

The second connection terminal 250 may further include a second groove portion 258 recessed in the thickness direction of the second bridge portion 255 from the convex surface of the second bridge portion 255. When the second connection terminal 250 is formed through plastic processing of a metal plate, when the convex surface of the second bridge portion 255 is pressed by a tool so that the second groove portion 258 is formed, the first rib portion 207 may be formed on the concave surface of the second bridge portion 255.

In a state in which the second convex protrusion 265 is in close contact with the second in-block terminal 455, the second flange portion 260 may be spaced apart from the second in-block terminal 455.

The second bent portion 270 may protrude from the second terminal body portion 251. A plurality of second bent portions 270 may be provided at both end portions of the second terminal body portion 251 in the width direction.

The second bent portion 270 may protrude upward in the positive Z-axis direction from under the insulating film 120 to pass through the insulating film 120. An upper end portion of the second bent portion 270 passing through the insulating film 120 and protruding upward from the insulating film 120 may be bent so as to make electrical contact with the second pack wire 135.

The block 401 may include a second terminal groove portion 435 recessed in a stepped manner toward the inside of the block 401 on the second side surface 412. The second in-block terminal 455 may be located in the second terminal groove portion 435. When the block 401 moves in the Z-axis direction relative to the second connection terminal 250, the upper and lower sides of the second terminal groove portion 435 may open in the Z-axis direction so that the block 401 is not restricted from moving by being caught on the second connection terminal 250.

When the fuse unit 400 moves in the negative Z-axis direction so as to be coupled to the battery-facing member 80A and the second tapered surface 262 and the second flange portion 260 of the second connection terminal 250 are fitted into the second terminal groove portion 435, the second convex protrusion 265 may not be inclined or moved in the Y-axis direction. Therefore, the second convex protrusion 265 may be reliably attached to the second in-block terminal 455.

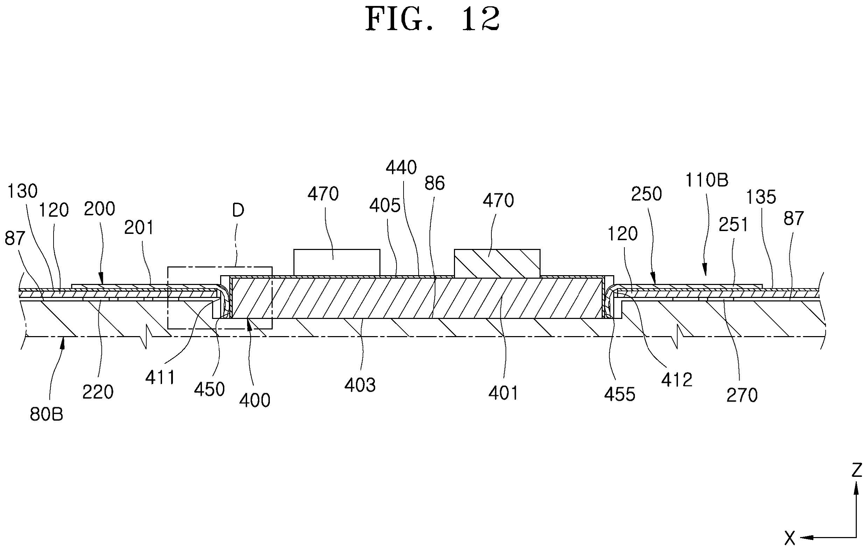

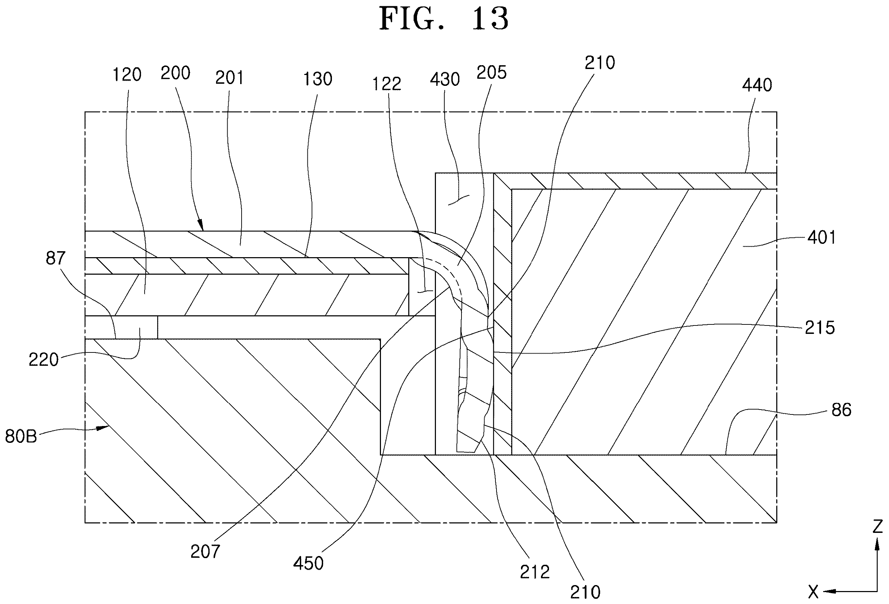

FIG. 12 is a cross-sectional view illustrating a fuse unit included in a battery pack according to embodiments of the present disclosure and elements coupled to the fuse unit, and is a view corresponding to FIG. 5 of the battery pack according to embodiments of the present disclosure, and FIG. 13 is an enlarged cross-sectional view of portion D of FIG. 12.

Referring to FIGS. 1, 2, 12, and 13, the battery pack according to embodiments of the present disclosure may include a battery stack ST including a plurality of secondary batteries 50, a pack housing 10, a battery-facing member 80B, a bus bar 70, a pack circuit part 110B, and a fuse unit 400, like the battery pack 1 according to embodiments of the present disclosure.

Since the secondary battery 50, the battery stack ST, the pack housing 10, the bus bar 70, and the fuse unit 400 have the same configuration as the secondary battery 50, the battery stack ST, the pack housing 10, the bus bar 70, and the fuse unit 400 included in the battery pack 1 according to embodiments of the present disclosure and are denoted by the same reference numerals, a redundant description will be omitted.

The battery-facing member 80B may include a block supporting surface 86 on which the block 401 of the fuse unit 400 is supported, and a peripheral surface 87 provided around the block supporting surface 86. The block supporting surface 86 may be concave and formed with a step from the peripheral surface 87. For example, a height of the peripheral surface 87 in the positive Z-axis direction may be greater than a height of the block supporting surface 86.

As the fuse unit 400 is mounted on the block supporting surface 86 having a low height, a height of the battery pack in the third direction may be designed to be lower than a height of the battery pack 1 according to embodiments of the present disclosure.

The pack circuit part 110B may include an insulating film 120, a first pack wire 130 electrically connected to the sensing parts 101 and 105, a second pack wire 135 electrically connected to a battery pack controller, a first connection terminal 200 electrically connected to the first pack wire 130 and the first block terminal 450, and a second connection terminal 250 electrically connected to the second pack wire 135 and the second block terminal 455.

The first connection terminal 200 and the second connection terminal 250 may be formed of a metal material having excellent electrical conductivity. The first connection terminal 200 and the second connection terminal 250 may be manufactured through, for example, plastic processing of a metal plate.

The first connection terminal 200 may include a first convex protrusion 215, a first flange portion 210, a first terminal body portion 201, a first bridge portion 205, and a first bent portion 220. The first convex protrusion 215, the first flange portion 210, the first terminal body portion 201, and the first bridge portion 205 have the same structure as the first convex protrusion 215, the first flange portion 210, the first terminal body portion 201, and the first bridge portion 205 provided in the battery pack 1 according to embodiments of the present disclosure, and are denoted by the same reference numbers, so a redundant description will be omitted.

However, the first bridge portion 205 is bent in the direction from the first terminal body portion 201 toward the battery-facing member 80B, and the first flange portion 210 also extends in the direction toward the battery-facing member 80B. In FIGS. 12 and 13, the direction toward the battery-facing member 80B may be the negative Z-axis direction.

The first bent portion 220 may protrude from the first terminal body portion 201. A plurality of first bent portions 220 may be provided at both end portions of the first terminal body portion 201 in the width direction.

The first bent portion 220 may protrude downward in the negative Z-axis direction from above the insulating film 120 to pass through the insulating film 120. A lower end portion of the first bent portion 220 that passes through the insulating film 120 and protrudes downward from the insulating film 120 may be bent and fixed to the insulating film 120.

Unlike the case of the first connection terminal 200 included in the battery pack 1 according to embodiments of the present disclosure, in the case of the first connection terminal 200 included in the battery pack according to embodiments of the present disclosure, the first bent portion 220 may not make electrical contact with the first pack wire 130. Instead, the first terminal body portion 201 may be supported by the insulating film 120 to make electrical contact with the first pack wire 130 whose upper surface is exposed.

The second connection terminal 250 may include a second convex protrusion 265, a second flange portion 260, a second terminal body portion 251, a second bridge portion 255, and a second bent portion 270. Since the second convex protrusion 265, the second flange portion 260, the second terminal body portion 251, and the second bridge portion 255 have the same structure as the second convex protrusion 265, the second flange portion 260, the second terminal body portion 251, and the second bridge portion 255 provided in the battery pack 1 according to embodiments of the present disclosure and are denoted by the same reference numbers, a redundant description will be omitted.

However, the second bridge portion 255 is bent in the direction from the second terminal body portion 251 toward the battery-facing member 80B, and the second flange portion 260 also extends in the direction toward the battery-facing member 80B. In FIG. 12, the direction toward the battery-facing member 80B may be the negative Z-axis direction.

The second bent portion 270 may protrude from the second terminal body portion 251. A plurality of second bent portions 270 may be provided at both end portions of the second terminal body portion 251 in the width direction.

The second bent portion 270 may protrude downward in the negative Z-axis direction from above the insulating film 120 to pass through the insulating film 120. A lower end portion of the second bent portion 270 that passes through the insulating film 120 and protrudes downward from the insulating film 120 may be bent and fixed to the insulating film 120.

Unlike the case of the second connection terminal 250 included in the battery pack 1 according to embodiments of the present disclosure, in the case of the second connection terminal 250 included in the battery pack according to embodiments of the present disclosure, the second bent portion 270 may not make electrical contact with the second pack wire 135. Instead, the second terminal body portion 251 may be supported by the insulating film 120 to make electrical contact with the second pack wire 135 whose upper surface is exposed.

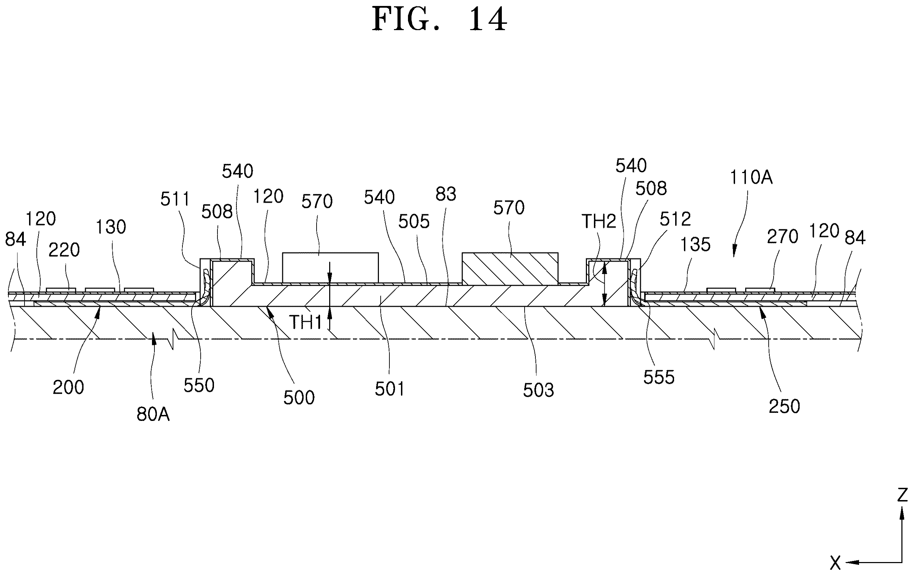

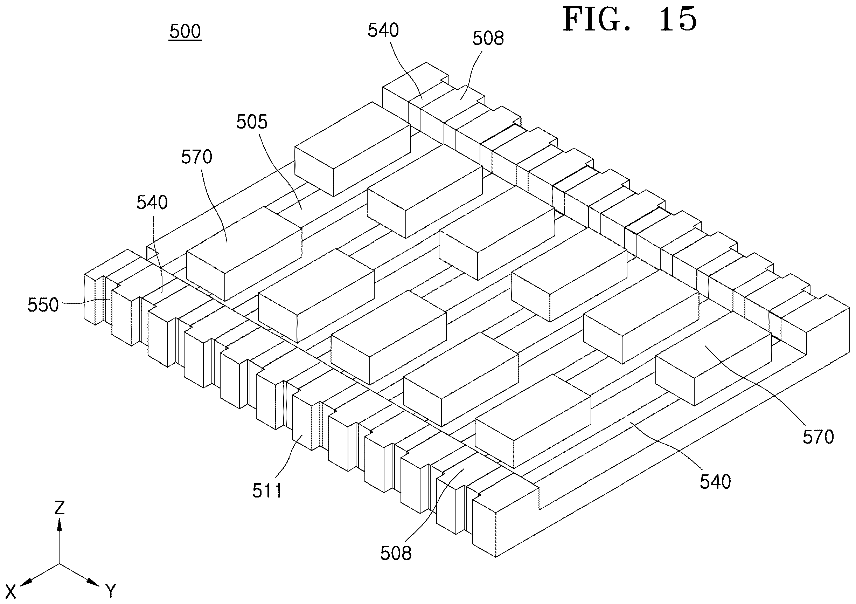

FIG. 14 is a cross-sectional view illustrating a fuse unit included in a battery pack according to embodiments of the present disclosure and elements coupled to the fuse unit, and is a view corresponding to FIG. 5 of the battery pack according to embodiments of the present disclosure, and FIG. 15 is a perspective view of the fuse unit of FIG. 14.

Referring to FIGS. 1, 2, 14, and 15, the battery pack according to embodiments of the present disclosure may include a battery stack ST including a plurality of secondary batteries 50, a pack housing 10, a battery-facing member 80A, a bus bar 70, a pack circuit part 110A, and a fuse unit 500, like the battery pack 1 according to embodiments of the present disclosure.

Since the secondary battery 50, the battery stack ST, the pack housing 10, the battery-facing member 80A, the bus bar 70, and the pack circuit part 110A have the same configuration as the secondary battery 50, the battery stack ST, the pack housing 10, the battery-facing member 80A, the bus bar 70, and the pack circuit part 110A included in the battery pack 1 according to embodiments of the present disclosure and denoted by the same reference numerals, a redundant description will be omitted.

The fuse unit 500 includes a block 501, an in-block wire 540, a fuse 570, a first in-block terminal 550 and a second in-block terminal 555. The block 501 is detachably coupled to the battery-facing member 80A.

The block 501 includes a bottom surface 503, a fuse mounting surface 505, a fuse peripheral surface 508, a first side surface 511, and a second side surface 512. The bottom surface 503 may be supported by the battery-facing member 80A. The fuse mounting surface 505 may be a surface opposite to the bottom surface 503. The fuse 570 is mounted on the fuse mounting surface 505. The fuse peripheral surface 508 may be formed to be stepped from the fuse mounting surface 505 at the periphery of the fuse mounting surface 505. The fuse peripheral surface 508 may be a surface opposite to the bottom surface 503.

The in-block wire 540 may be formed on a surface of the block 501. In the fuse unit 500 shown in FIG. 14, the in-block wire 540 may be formed on the fuse mounting surface 505 and the fuse peripheral surface 508 of the block 501. The fuse 570 may be connected to the in-block wire 540. The fuse 570 may be a chip type fuse mounted on the block 501.

The first in-block terminal 550 and the second in-block terminal 555 are connected to the in-block wire 540. The first in-block terminal 550 may be located at the first side surface 511, and the second in-block terminal 555 may be located at the second side surface 512. In FIG. 14, the first side surface 511 may be a front surface of the block 501, and the second side surface 512 may be a rear surface of the block 501.

A thickness TH1 between the bottom surface 503 and the fuse mounting surface 505 may be thinner than a thickness TH2 between the bottom surface 503 and the fuse peripheral surface 508. Therefore, the height of the battery pack in the third direction may be designed to be lower than the height of the battery pack 1 according to embodiments of the present disclosure.

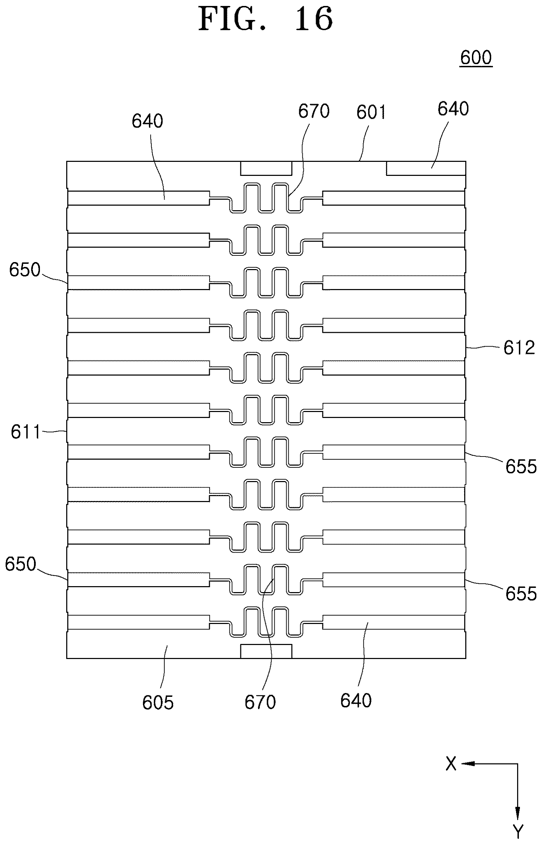

FIG. 16 is a plan view of a fuse unit included in a battery pack according to embodiments of the present disclosure. Referring to FIGS. 1, 2, and 16, the battery pack according to embodiments of the present disclosure may include a battery stack ST including a plurality of secondary batteries 50, a pack housing 10, a battery-facing member 80A, a bus bar 70, a pack circuit part 110A, and a fuse unit 600, like the battery pack 1 according to embodiments of the present disclosure.

Since the secondary battery 50, the battery stack ST, the pack housing 10, the battery-facing member 80A, the bus bar 70, and the pack circuit part 110A have the same configuration as the secondary battery 50, the battery stack ST, the pack housing 10, the battery-facing member 80A, the bus bar 70, and the pack circuit part 110A included in the battery pack 1 according to embodiments of the present disclosure and denoted by the same reference numerals, a redundant description will be omitted.

The fuse unit 600 includes a block 601, an in-block wire 640, a fuse 670, a first in-block terminal 650, and a second in-block terminal 655. The block 601 is detachably coupled to the battery-facing member 80A.

The block 601 includes a bottom surface (not shown), a fuse mounting surface 605, a first side surface 611, and a second side surface 612. The bottom surface may be supported by the battery-facing member 80A. The fuse mounting surface 605 may be a surface opposite to the bottom surface. The fuse 670 is mounted on the fuse mounting surface 605.

The in-block wire 640 may be formed on a surface of the block 601. In the fuse unit 600 shown in FIG. 16, the in-block wire 640 may be formed on the fuse mounting surface of the block 601. The fuse 670 may be connected to the in-block wire 640.

The fuse 670 may be a trace type fuse formed in the block 601 so that one end portion and the other end portion are connected to the in-block wire 640. The trace type fuse 670 may extend along a zigzag path. When an overcurrent flows through the in-block wire 640, the trace type fuse 670 is broken so that an accident such as a fire may be prevented.

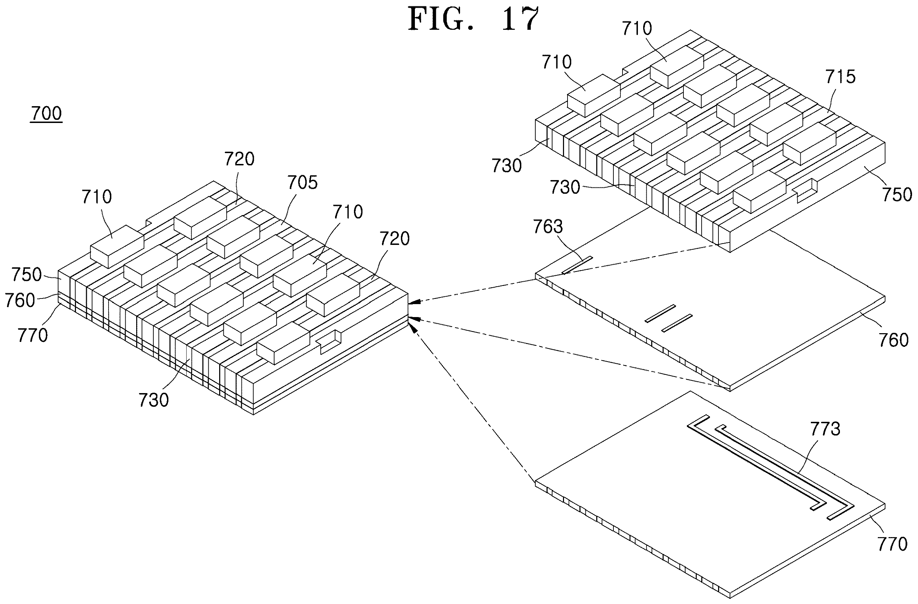

FIG. 17 is a perspective view of a fuse unit included in a battery pack according to embodiments of the present disclosure. Referring to FIGS. 1, 2, and 17, the battery pack according to embodiments of the present disclosure may include a battery stack ST including a plurality of secondary batteries 50, a pack housing 10, a battery-facing member 80A, a bus bar 70, a pack circuit part 110A, and a fuse unit 600, like the battery pack 1 according to embodiments of the present disclosure.

Since the secondary battery 50, the battery stack ST, the pack housing 10, the battery-facing member 80A, the bus bar 70, and the pack circuit part 110A have the same configuration as the secondary battery 50, the battery stack ST, the pack housing 10, the battery-facing member 80A, the bus bar 70, and the pack circuit part 110A included in the battery pack 1 according to embodiments of the present disclosure and denoted by the same reference numerals, a redundant description will be omitted.

Unlike the fuse unit 400 included in the battery pack 1 according to embodiments of the present disclosure includes a single-layered block 401, a fuse unit 700 included in the battery pack according to embodiments of the present disclosure may include a plurality of layers of blocks 750, 760, and 770. The plurality of layers of blocks 750, 760, and 770 may include first to third blocks 750, 760, and 770.

The first to third blocks 750, 760, and 770 are stacked in a thickness direction, and may be electrically connected by a connecting part such as a via hole. The first block 750 may include a fuse mounting surface 715. An in-block wire 720 may be formed on the fuse mounting surface 715. The fuse unit 700 may include a fuse 710 mounted on the fuse mounting surface 715. The fuse 710 may be, for example, a chip type fuse.

The first in-block terminal 730 and the second in-block terminal (not shown) are connected to the in-block wire 440. The first in-block terminal 730 may be located at a first side surface of the stacked first to third blocks 750, 760, and 770, and the second in-block terminal (not shown) may be located at a second side surface (not shown) facing away from the first side surface.

Circuits 763 and 773, which perform predetermined functions, may be formed in the second block 760 and the third block 770, respectively.

Since the fuse unit 700 includes the plurality of layers of blocks 750, 760, and 770, an additional circuit may be included in a plurality of layers of the fuse unit 700 instead of using an expensive pack circuit part 110A such as a double layer flexible printed circuit. In other words, since a circuit formed to be overlapped due to space constraints may be implemented in the fuse unit 700 with the plurality of layers of blocks 750, 760, and 770 that are relatively inexpensive, the manufacturing costs of the battery pack may be reduced.

According to the present disclosure, a fuse unit including a fuse can be detachably installed in a battery pack. Therefore, when some of the fuses operate and open, only the fuse unit can be replaced and installed without separating the pack circuit part from the battery pack. Accordingly, the battery pack does not have to be discarded, thereby reducing the maintenance and repair costs of devices or equipment using the battery pack.

However, aspects and features of the present disclosure are not limited to those described herein and other aspects and features not mentioned will be clearly understood by those skilled in the art from the detailed description given herein.

Although the present disclosure has been described with reference to some embodiments and drawings illustrating aspects thereof, the present disclosure is not limited thereto. Various modifications and variations can be made by a person skilled in the art to which the present disclosure belongs.

## Claims

1. A battery pack (1) comprising:
a battery stack (ST) including a plurality of secondary batteries;
a pack housing (10) in which the battery stack is accommodated;
a battery-facing member (80A, 80B) disposed to face one side of the battery stack; and
a fuse unit (400, 500, 600, 700) including a block (401, 501, 601) detachably coupled to the battery-facing member (80A, 80B), an in-block wire (440, 540, 640) formed in the block, a fuse (470, 570, 670) connected to the in-block wire (440, 540, 640), and a first in-block terminal (450, 550, 650) and a second in-block terminal (455, 555, 655) connected to the in-block wire and provided on one side and another side of the block.

2. The battery pack as claimed in claim 1, wherein:
each of the secondary batteries (50) includes a pair of battery terminals (60, 65),
the battery pack further includes a bus bar (70) connecting one of the pair of battery terminals included in one of the plurality of secondary batteries and one of the pair of battery terminals included in another of the plurality of secondary batteries, and
the battery-facing member (80A, 80B) supports the bus bar (70).

3. The battery pack as claimed in claim 1 or claim 2, wherein the battery-facing member (80A, 80B) includes a pair of hooks (90) which are spaced apart from one another so that the block (401, 501, 601) is interposed therebetween and are elastically deformed in a direction in which a gap therebetween increases.

4. The battery pack as claimed in claim 3, wherein:
the hook (90) includes a hook protrusion (92) protruding toward the block (401), and
the block (401) includes a hook fastening groove portion (420) into which the hook protrusion (92) is fitted.

5. The battery pack as claimed in any one of claims 1 to 4, wherein:
one of the block (401) and the battery-facing member (80A, 80B) includes a guide protrusion (95) protruding toward another,
another of the block (401) and the battery-facing member (80A, 80B) includes a guide groove portion (425) into which the guide protrusion (95) is inserted, and
the block (401) is coupled to the battery-facing member (80A, 80B) only when the guide protrusion (95) is fitted into the guide groove portion (425).

6. The battery pack as claimed in any one of claims 1 to 5, further comprising a pack circuit part (110A, 110B) including a first connection terminal (200) connected to the first in-block terminal (450, 550, 650) when the fuse unit (400, 500, 600) is coupled to the battery-facing member (80A, 80B), a first pack wire (130) connected to the first connection terminal (200), a second connection terminal (250) connected to the second in-block terminal (455, 555, 655) when the fuse unit (400) is coupled to the battery-facing member (80A, 80B), and a second pack wire (135) connected to the second connection terminal (250).

7. The battery pack as claimed in claim 6, further comprising a sensing part (101, 105) connected to the first pack wire (130) or the second pack wire (135) to measure a state of the battery stack.

8. The battery pack as claimed in claim 6 or claim 7, wherein:
the first connection terminal (200) includes a first convex protrusion (215) protruding convexly toward the first in-block terminal (450, 550, 650) so as to be in contact with the first in-block terminal and having a curved cross-sectional shape, and
the second connection terminal (250) includes a second convex protrusion (265) protruding convexly toward the second in-block terminal (455, 555, 655) so as to be in contact with the second in-block terminal and having a curved cross-sectional shape.

9. The battery pack as claimed in claim 8, wherein the first connection terminal (200) further includes:
a first flange portion (210) flatly extending around the first convex protrusion (215);
a first terminal body portion (201) overlapping the first pack wire (130); and
a first bridge portion (205) connecting the first flange portion (210) and the first terminal body portion (201) and extending along a curved path, and
the second connection terminal (250) further includes:
a second flange portion (260) connected flatly extending around the second convex protrusion (265);
a second terminal body portion (251) overlapping the second pack wire (135); and
a second bridge portion (255) connecting the second flange portion (260) and the second terminal body portion (251) and extending along a curved path.

10. The battery pack as claimed in claim 9, wherein:
the first connection terminal (200) further includes a first rib portion (207) protruding from the first bridge portion (205) in a thickness direction of the first bridge portion, and
the second connection terminal (250) further includes a second rib portion (257) protruding from the second bridge portion (255) in a thickness direction of the second bridge portion.

11. The battery pack as claimed in claim 9 or claim 10, wherein:
in a state in which the first convex protrusion (215) is in contact with the first in-block terminal (450, 550, 650), the first flange portion (210) is spaced apart from the first in-block terminal, and
in a state in which the second convex protrusion (265) is in contact with the second in-block terminal (455, 555, 655), the second flange portion (260) is spaced apart from the second in-block terminal.

12. The battery pack as claimed in any one of claims 9 to 11, wherein:
the pack circuit part (110A) further includes an insulating film (120) supporting the first pack wire and the second pack wire,
the first connection terminal (200) further includes a first bent portion (220) that protrudes from the first terminal body portion (201), passes through the insulating film (120), and is bent to couple the first connection terminal (200) to the insulating film (120) and electrically come into contact with the first pack wire (130), and
the second connection terminal (250) further includes a second bent portion (270) that protrudes from the second terminal body portion (251), passes through the insulating film (120), and is bent to couple the second connection terminal (250) to the insulating film (120) and electrically come into contact with the second pack wire (135).

13. The battery pack as claimed in any one of claims 9 to 11, wherein:
the pack circuit part (110B) further includes an insulating film (120) supporting the first pack wire (130) and the second pack wire (135),
the first connection terminal (200) further includes a first bent portion (220) that protrudes from the first terminal body portion, passes through the insulating film (120), and is bent to couple the first connection terminal (200) to the insulating film (120),
the second connection terminal (250) further includes a second bent portion (270) that protrudes from the second terminal body portion (251), passes through the insulating film (120), and is bent to couple the second connection terminal (250) to the insulating film (120), and
the first terminal body portion (201) is electrically in contact with the first pack wire (130), and the second terminal body portion (251) is electrically in contact with the second pack wire (135).

14. The battery pack as claimed in any one of claims 9 to 13, wherein:
the first in-block terminal (450) is located at a first side surface (411) of the block (401), and
the second in-block terminal (455) is located at a second side surface of the block (401) facing away from the first side surface.

15. The battery pack as claimed in claim 14, wherein the block (401) includes:
a first terminal groove portion (430) recessed in a stepped manner toward an inside of the block (401) on the first side surface (411) and where the first in-block terminal (450) is located; and
a second terminal groove portion (435) recessed in a stepped manner toward an inside of the block (401) on the second side surface and where the second in-block terminal (455) is located, and
wherein:
when the first convex protrusion (215) is in contact with the first in-block terminal (450), the first convex protrusion (215) and the first flange portion are fitted into the first terminal groove portion, and
when the second convex protrusion (265) is in contact with the second in-block terminal (455), the second convex protrusion (265) and the second flange portion (260) are fitted into the second terminal groove portion (435).
